# EUROPEAN PATENT APPLICATION

(11) **EP 2 963 567 A1**
(43) Date of publication of application: **06.01.2016**
(21) Application number: 15165980.2
(22) Date of filing: 30.04.2015
(51) Int. Cl.: G06F 17/30

(54) **METHOD, DEVICE, SERVER AND TERMINAL FOR VISITING WEBPAGE**

(30) Priority: 04.07.2014 CN 201410320383
(71) Applicant: Xiaomi Inc., Beijing 100085 (CN)
(72) Inventor: Wang, Shicheng, Beijing (CN); Xu, Yan, Beijing (CN); Zhang, Daoqing, Beijing (CN)
(74) Representative: Hanna, Peter William Derek

(57) **Abstract**

The present disclosure relates to a method, a cloud server and a client terminal. The method includes, at a server: receiving (S102) a webpage visit request from a client, wherein the webpage visit request includes at least a webpage uniform resource locator (url) and a last visit time point; searching (S104) a webpage update database corresponding to the webpage according to the webpage url, wherein one or more update time points and webpage content information corresponding to the respective update time points is/are stored in the webpage update database; generating (S106) a webpage increment data package according to the webpage update database and the last visit time point, wherein the webpage increment data package includes webpage update contents from the last visit time point to a most recent update time point; and sending (S108) the webpage increment data package to the client. The present disclosure may increase visit speed of websites that are frequently visited, thereby improving user experience.

## Description

### TECHNICAL FIELD

The present disclosure generally relates to the field of the Internet, and more particularly, to a method, a device, a server and a terminal for visiting a webpage, in particular for downloading a frequently visited webpage at a client device.

### BACKGROUND

As webpage content is more and more abundant, the amount of data in webpages becomes more and more enormous. Due to network limitations of a visiting terminal, such as the speed limitation of 2G/3G network, users cannot be satisfied with the speed of visiting webpages.

### SUMMARY

In order to overcome the problems existing in the prior art, the present invention provides a method, a device, a cloud server and a terminal for visiting a webpage, in accordance with claims which follow.

According to a first aspect of embodiments of the present disclosure, there is provided a method for visiting a webpage, including: receiving a webpage visit request from a client, wherein the webpage visit request includes at least a webpage unique resource locator (url) and a last visit time point; searching a webpage update database corresponding to the webpage according to the webpage url, wherein one or more update time points and webpage content information corresponding to the respective update time points is/are stored in the webpage update database; generating a webpage increment data package according to the webpage update database and the last visit time point, wherein the webpage increment data package includes webpage update contents from the last visit time point to a most recent update time point; and sending the webpage increment data package to the client.

In the method for visiting the webpage, the webpage update database is updated by the following update process: visiting a webpage corresponding to the webpage update database; judging whether update contents exist in the webpage; and if the update contents exist in the webpage, downloading webpage contents of the webpage, and the webpage update database saves the download time as an update time point, and generates webpage content information corresponding to the update time point according to the downloaded webpage contents.

The method for visiting the webpage includes: the webpage update database regularly starting the update process of the webpage update database; or the webpage update database starting the update process of the webpage update database after receiving the webpage visit request.

In the method for visiting the webpage, the generating the webpage increment data package according to the webpage update database and the last visit time point includes: searching a first update time point closest to the last visit time point after the last visit time point among the update time points of the webpage update database according to the last visit time point; and generating a webpage increment data package according to webpage content information corresponding to respective update time points from the first update time point to a most recent update time point.

The method for visiting the website further includes: carrying out statistics of a visit number of the webpage according to the webpage visit request; if the visit number of the webpage is lower than a first threshold value within a certain time, deleting the webpage update database corresponding to the webpage; and if the visit number of the webpage is higher than a second threshold value within a certain time and no webpage update database corresponding to the webpage exists, creating the webpage update database corresponding to the webpage.

According to a second aspect of the embodiments of the present disclosure, there is provided a method for visiting a webpage, including: sending a webpage visit request to a sever, wherein the webpage visit request includes at least a webpage url and a last visit time point; receiving a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point; combining the webpage increment data package with cached webpage contents of the webpage to obtain an updated webpage; and updating the cached webpage contents according to the obtained updated webpage, and recording a visit time point.

In the method for visiting the webpage, the combining the webpage increment data package with the cached webpage contents of the webpage to obtain the updated webpage includes: according to an increment resource in the webpage increment data package, adding the increment resource into the cached webpage contents of the webpage; according to a substitution resource in the webpage increment data package, substituting a corresponding resource in the cached webpage contents of the webpage with the substitution resource; and according to a deletion resource in the webpage increment data package, deleting a corresponding resource in the cached webpage contents of the webpage.

According to a third aspect of the embodiments of the present disclosure, there is provided a device for visiting a webpage, including: a receiving module configured to receive a webpage visit request from a client, wherein the webpage visit request includes at least a webpage url and a last visit time point; a search module configured to search a webpage update database corresponding to the webpage according to the webpage url, wherein one or more update time points and webpage content information corresponding to the respective update time points is/are stored in the webpage update database; a generation module configured to generate a webpage increment data package according to the webpage update database and the last visit time point, wherein the webpage increment data package includes webpage update contents from the last visit time point to a most recent update time point; and a sending module configured to send the webpage increment data package to the client.

The device for visiting the webpage further includes: an update module configured to update the webpage update database, which includes to visit a webpage corresponding to the webpage update database, judge whether update contents exist in the webpage, and download webpage contents of the webpage if the update contents exist in the webpage, wherein the webpage update database saves the download time as an update time point, and generates webpage content information corresponding to the update time point according to the downloaded webpage contents.

The device for visiting the webpage further includes: a statistics module configured to carry out statistics of a visit number of the webpage according to the webpage visit request; a deletion module configured to delete the webpage update database corresponding to the webpage if the visit number of the webpage is lower than a first threshold value within a certain time; and a creation module configured to create the webpage update database corresponding to the webpage if the visit number of the webpage is higher than a second threshold value within a certain time and no webpage update database corresponding to the webpage exists.

According to a fourth aspect of the embodiments of the present disclosure, there is provided a device for visiting a webpage, including: a visit module configured to send a webpage visit request to a sever, wherein the webpage visit request includes at least a webpage url and a last visit time point; a receiving module configured to receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point; a combination module configured to combine the webpage increment data package with cached webpage contents of the webpage to obtain an updated webpage; and a catching module configured to update the cached webpage contents according to the obtained updated webpage, and record a visit time point.

In the device for visiting the webpage, the combination module includes: an increment module configured to, according to an increment resource in the webpage increment data package, add the increment resource into the cached webpage contents of the webpage; a substitution module configured to, according to a substitution resource in the webpage increment data package, substitute a corresponding resource in the cached webpage contents of the webpage with the substitution resource; and a deletion module configured to, according to a deletion resource in the webpage increment data package, delete a corresponding resource in the cached webpage contents of the webpage.

According to a fifth aspect of the embodiments of the present disclosure, there is provided a server for visiting a webpage, including: a processor; and a memory for storing instructions executable by the processor; wherein the processor is configured to receive a webpage visit request from a client, wherein the webpage visit request includes at least a webpage url and a last visit time point; search a webpage update database corresponding to the webpage according to the webpage url, wherein one or more update time points and webpage content information corresponding to the respective update time points is/are stored in the webpage update database; generate a webpage increment data package according to the webpage update database and the last visit time point, wherein the webpage increment data package includes webpage update contents from the last visit time point to a most recent update time point; and send the webpage increment data package to the client.

According to a sixth aspect of the embodiments of the present disclosure, there is provided a terminal for visiting a webpage, including: a processor; and a memory for storing instructions executable by the processor; wherein the processor is configured to send a webpage visit request to a sever, wherein the webpage visit request includes at least a webpage url and a last visit time point; receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point; combine the webpage increment data package with cached webpage contents of the webpage to obtain an updated webpage; and update the cached webpage contents according to the obtained updated webpage, and record a visit time point.

According to a seventh aspect of embodiments of the present disclosure, there is provided a computer program, which when executing on a processor of a device for visiting a webpage, performs a method for visiting a webpage according to the above first aspect.

According to a eighth aspect of embodiments of the present disclosure, there is provided a computer program, which when executing on a processor of a device for visiting a webpage, performs a method for visiting a webpage according to the above second aspect.

Technical solutions provided by the embodiments of the present disclosure may include the following advantageous effects: a visit speed may be increased for a website that is frequently visited, thereby user experience may be improved.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments being consistent with the disclosure and, together with the description, serve to explain the principles of the disclosure.
Fig. 1 is a flow chart showing a method for visiting a webpage, according to an exemplary embodiment.
Fig. 2 is a flow chart showing update of a webpage update database, according to an exemplary embodiment.
Fig. 3 is a flow chart showing a method for visiting a webpage, according to another exemplary embodiment.
Fig. 4 is a diagram illustrating a device for visiting a webpage, according to an exemplary embodiment.
Fig. 5 is a diagram illustrating a device for visiting a webpage, according to another exemplary embodiment.
Fig. 6 is a diagram illustrating a device for visiting a webpage, according to still another exemplary embodiment.
Fig. 7 is a block diagram illustrating a server for visiting a webpage, according to an exemplary embodiment.
Fig. 8 is a block diagram illustrating a terminal for visiting a webpage, according to an exemplary embodiment.
Fig. 9 is a diagram illustrating a data flow of an Internet system, according to an exemplary embodiment.
Fig. 10 is a diagram illustrating a data flow of an Internet system, according to another exemplary embodiment.

### DETAILED DESCRIPTION

Exemplary embodiments will be described in detail herein, with examples thereof shown in drawings. In the following descriptions, when the drawings are referred to, unless expressed otherwise, the same number in different drawings refers to the same or similar elements. The implementations described in the exemplary embodiments below do not represent all implementations that are consistent with the present disclosure. On the contrary, they are only examples of devices and methods that are consistent with some aspects of the present disclosure as recited in the claims.

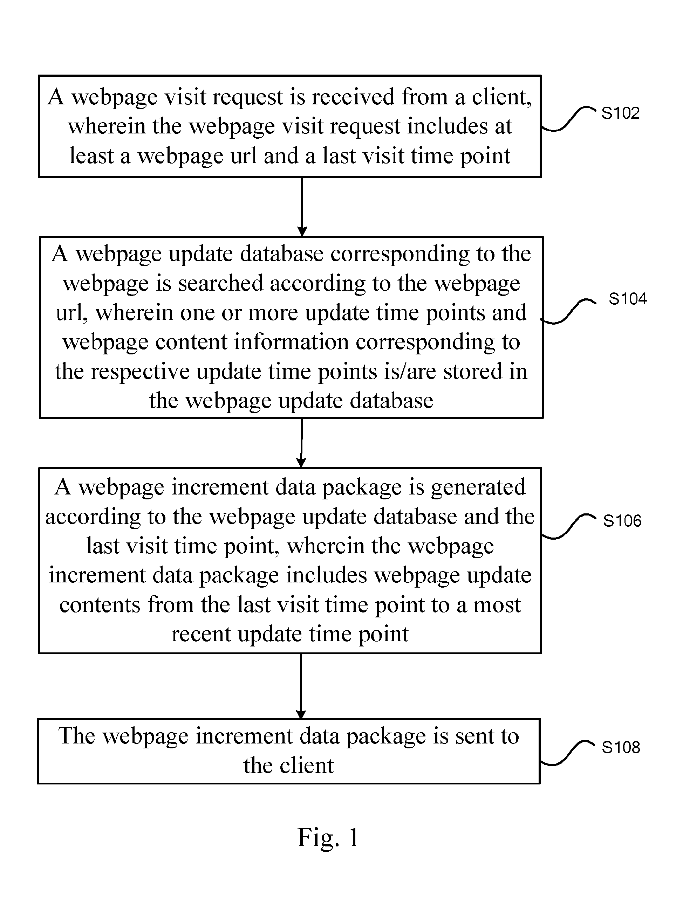

Fig. 1 is a flow chart showing a method for visiting a webpage, according to an exemplary embodiment. The method includes the following steps.

In step S102, a webpage visit request is received from a client, wherein the webpage visit request includes at least a webpage url and a last visit time point.

In step S104, a webpage update database corresponding to the webpage is searched according to the webpage url, wherein one or more update time points and webpage content information corresponding to the respective update time points is/are stored in the webpage update database.

In step S106, a webpage increment data package is generated according to the webpage update database and the last visit time point, wherein the webpage increment data package includes webpage update contents from the last visit time point to a most recent update time point.

In step S108, the webpage increment data package is sent to the client.

In the present embodiment, a cloud server only sends the webpage update contents after a certain time point to the client, and the client may combine these update contents with the webpage that is locally cached to obtain the latest webpage. When a user uses a browser, the user usually browses his/her favorite websites such as Sina, Sohu and so on. In his/her daily life, these websites are the ones mainly visited. In the related art, when the browser visits the webpage again, the browser also needs to download all the data, therefore, if changes between the last visit and this visit are small, this manner may cause a lot of unnecessary data transmission, thus cause a waste of bandwidth. In the case of 2G/3G, the webpage is loaded very slowly, which causes poor user experience. However, in the present embodiment, for the websites that are frequently visited, this sending manner only needs to send the updated contents, not the contents of the entire webpage, which significantly reduces the amount of data transmission, thus the visit speed may be increased, and user experience may be improved.

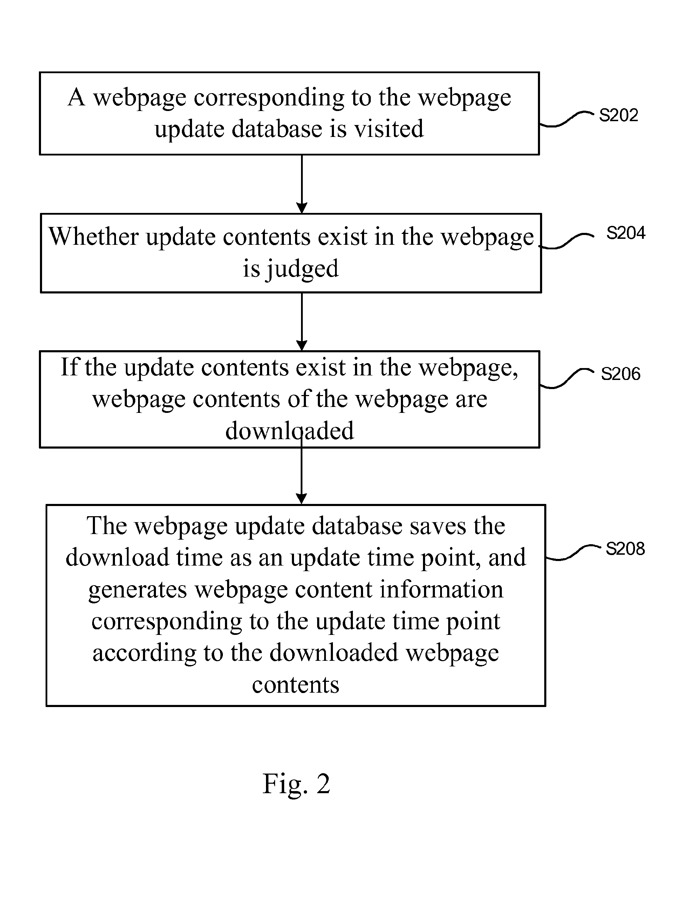

Fig. 2 is a flow chart showing update of a webpage update database, according to an exemplary embodiment. The webpage update database is updated by the following update process.

In step S202, a webpage corresponding to the webpage update database is visited.

In step S204, whether update contents exist in the webpage is judged.

In step S206, if the update contents exist in the webpage, webpage contents of the webpage are downloaded.

In step S208, the webpage update database saves a download time as an update time point, and generates webpage content information corresponding to the update time point according to the downloaded webpage contents.

The present embodiment uses the database to manage webpage increment data, which can efficiently increase data storage and retrieval efficiency.

In addition to latest contents of the webpage, the database also saves webpage data of a reference time point, as well as content differences of a series of time points after the reference time point. When a browser of a client initiates a request for visiting the webpage, the request may carry information of a time point, and if the request does not carry information of a time point, the webpage is updated to the latest contents of the webpage. If the request carries information of a time point, the corresponding content differences are calculated, and the webpage is only updated with the different contents. The browser of the client may be responsible for reorganizing and displaying the contents of the webpage.

The method for visiting the webpage may include: the webpage update database regularly starting the update process of the webpage update database; or the webpage update database starting the update process of the webpage update database after receiving the webpage visit request.

The present application is simple and practicable, and may efficiently realize the update of the webpage update database.

In the method for visiting the webpage, the step S106 may include:
according to a last visit time point, searching a first update time point closest to the last visit time point after the last visit time point, among the update time points of the webpage update database; and
generating webpage increment data packages, according to webpage content information corresponding to respective update time points from the first update time point to a most recent update time point.

The present embodiment realizes retrieval applications of an increment database. The present application is easy and practicable, and efficiently realizes the generation of the webpage increment data package by using the webpage update database.

The method for visiting the webpage may further include:
carrying out statistics of a visit number of the webpage, according to the webpage visit request;
if the visit number of the webpage is lower than a first threshold value within a certain time, deleting the webpage update database corresponding to the webpage; and
if the visit number of the webpage is higher than a second threshold value within a certain time and no webpage update database corresponding to the webpage exists, creating a webpage update database corresponding to the webpage.

If all the webpages are provided with the above increment update service, the pressure on the server is great. According to this embodiment, it may be ensured that only the webpages that are frequently visited by users are updated, thereby the pressure from the update of the database is reduced.

In one embodiment, this method may further include:
when the request does not include a time point, locating an address of the webpage being requested, to an item of the webpage in the database;
obtaining a most recent time point and contents of the webpage from the item of the webpage; and
sending the most recent time point and the contents of the webpage to the client.

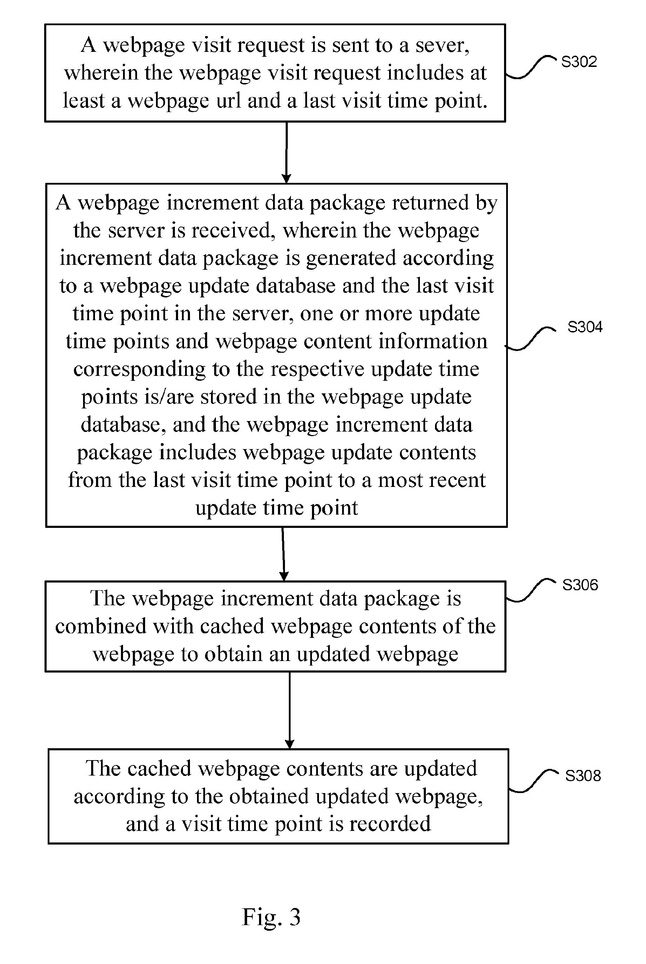

Sometimes, the user may visit a website that he/she has not visited before, and in such a case, the client does not cache any data of the website, or have a last visit time point. For this case, the present embodiment provides a corresponding solution, that is, a cloud directly provides contents of the webpage to be visited, and further provides a time point to the client, thus, when the client visits the webpage next time, the visit speed can be quickened. Fig. 3 is a flow chart showing a method for visiting a webpage, according to another exemplary embodiment. The method includes the following steps.

In step S302, a webpage visit request is sent to a sever, wherein the webpage visit request includes at least a webpage url and a last visit time point.

In step S304, a webpage increment data package returned by the server is received, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point.

In step S306, the webpage increment data package is combined with cached webpage contents of the webpage to obtain an updated webpage.

In step S308, the cached webpage contents are updated according to the obtained updated webpage, and a visit time point is recorded.

The present embodiment provides an optimization solution of the client, that is, a cloud server only sends the webpage update contents after a certain time point to the client, and the client combines these update contents with the webpage that is locally cached to obtain the latest webpage. When a user browses websites that are frequently visited, this sending manner only needs to send the updated contents, not the contents of the entire webpage, which significantly reduces the amount of data transmission, thus the visit speed may be increased, and user experience may be improved.

In the method for visiting the webpage, the step S306 may include:
according to an increment resource in the webpage increment data package, adding the increment resource into the cached webpage contents of the webpage;
according to a substitution resource in the webpage increment data package, substituting a corresponding resource in the cached webpage contents of the webpage with the substitution resource; and
according to a deletion resource in the webpage increment data package, deleting a corresponding resource in the cached webpage contents of the webpage.

The present embodiment provides there edition manners of increment, substitution and deletion, thereby efficiently realizing the update of the webpage.

In one embodiment, this method may further include:
when it is determined that no cached content of the webpage and corresponding time point exist, sending a webpage visit request to the cloud server, wherein the request does not include a time point;
receiving a most recent time point and corresponding contents;
obtaining the webpage by the corresponding contents; and
caching the obtained contents of the webpage and the most recent time point.

Sometimes, the user may visit a website that he/she has not visited before, a cloud directly provides contents of the webpage to be visited, and further provides a time point to the client, thus, when the client visits the webpage next time, the visit speed can be quickened.

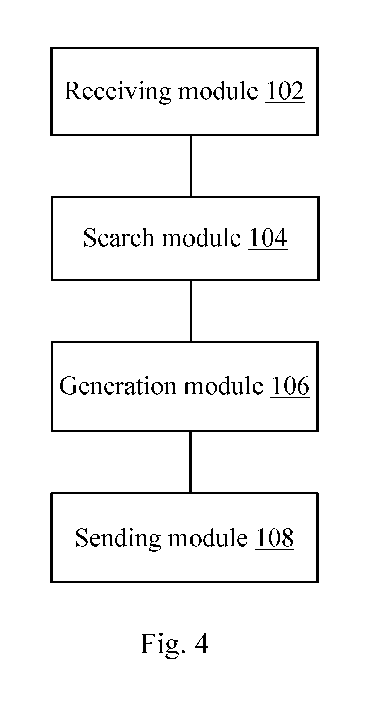

Fig. 4 is a diagram illustrating a device for visiting a webpage, according to an exemplary embodiment. The device includes:
a receiving module 102 configured to receive a webpage visit request from a client, wherein the webpage visit request includes at least a webpage url and a last visit time point;
a search module 104 configured to search a webpage update database corresponding to the webpage according to the webpage url, wherein one or more update time points and webpage content information corresponding to the respective update time points is/are stored in the webpage update database;
a generation module 106 configured to generate a webpage increment data package according to the webpage update database and the last visit time point, wherein the webpage increment data package includes webpage update contents from the last visit time point to a most recent update time point; and
a sending module 108 configured to send the webpage increment data package to the client.

In the present embodiment, the device for visiting the webpage only sends the webpage update contents after a certain time point to the client, and the client may combine these update contents with the webpage that is locally cached to obtain the latest webpage. When a user uses a browser, the user usually browses his/her favorite websites such as Sina, Sohu and so on. In his/her daily life, these websites are the ones mainly visited. For the websites that are frequently visited, this sending manner only needs to send the updated contents, not the contents of the entire webpage, which significantly reduces the amount of data transmission, thus the visit speed may be increased, and user experience may be improved.

The above device for visiting the webpage further includes: an update module configured to update the webpage update database, which includes to visit a webpage corresponding to the webpage update database, judge whether update contents exist in the webpage, and download webpage contents of the webpage if the update contents exist in the webpage, wherein the webpage update database saves the download time as an update time point, and generates webpage content information corresponding to the update time point according to the downloaded webpage contents.

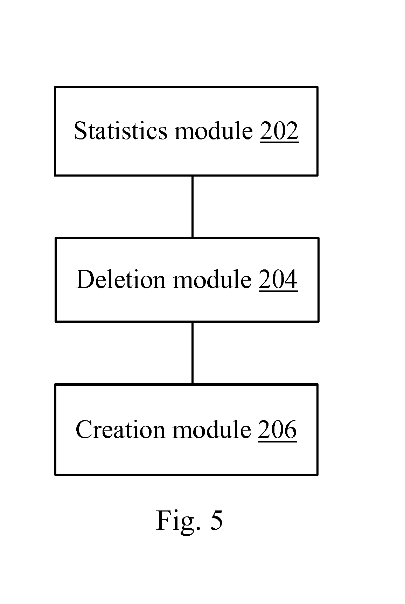

Fig. 5 is a diagram illustrating a device for visiting a webpage, according to another exemplary embodiment. The device further includes:
a statistics module 202 configured to carry out statistics of a visit number of the webpage according to the webpage visit request;
a deletion module 204 configured to delete the webpage update database corresponding to the webpage if the visit number of the webpage is lower than a first threshold value within a certain time; and
a creation module 206 configured to create a webpage update database corresponding to the webpage if the visit number of the webpage is higher than a second threshold value within a certain time and no webpage update database corresponding to the webpage exists.

If all the webpages are provided with the above increment update service, the pressure on the server is great. According to this embodiment, it may be ensured that only the webpages that are frequently visited by users are updated, thereby the pressure from the update of the database is reduced.

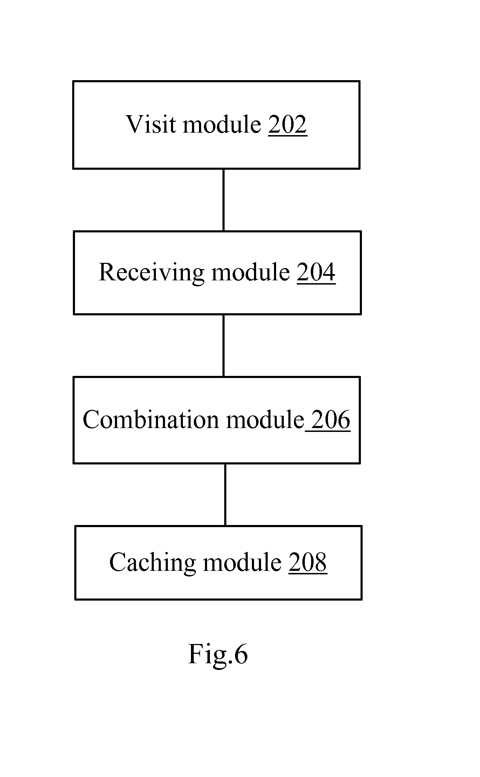

Fig. 6 is a diagram illustrating a device for visiting a webpage, according to still another exemplary embodiment. The device includes:
a visit module 302 configured to send a webpage visit request to a sever, wherein the webpage visit request includes at least a webpage url and a last visit time point;
a receiving module 304 configured to receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point;
a combination module 306 configured to combine the webpage increment data package with cached webpage contents of the webpage to obtain an updated webpage; and
a catching module 308 configured to update the cached webpage contents according to the obtained updated webpage, and record a visit time point.

The present embodiment provides an optimization solution for visiting a webpage, that is, a cloud server only sends the webpage update contents after a certain time point to the client, and the client combines these update contents with the webpage that is locally cached to obtain the latest webpage. When a user browses the websites that are frequently visited, this sending manner only needs to send the updated contents not the entire webpage, which significantly reduces the amount of data transmission, thus the visit speed may be increased, and user experience may be improved.

In the device for visiting the webpage, the combination module may include:
an increment module configured to, according to an increment resource in the webpage increment data package, add the increment resource into the cached webpage contents of the webpage;
a substitution module configured to, according to a substitution resource in the webpage increment data package, substitute a corresponding resource in the cached webpage contents of the webpage with the substitution resource; and
a deletion module configured to, according to a deletion resource in the webpage increment data package, delete a corresponding resource in the cached webpage contents of the webpage.

The present embodiment provides there edition manners of increment, substitution and deletion, thereby efficiently realizing the update of the webpage.

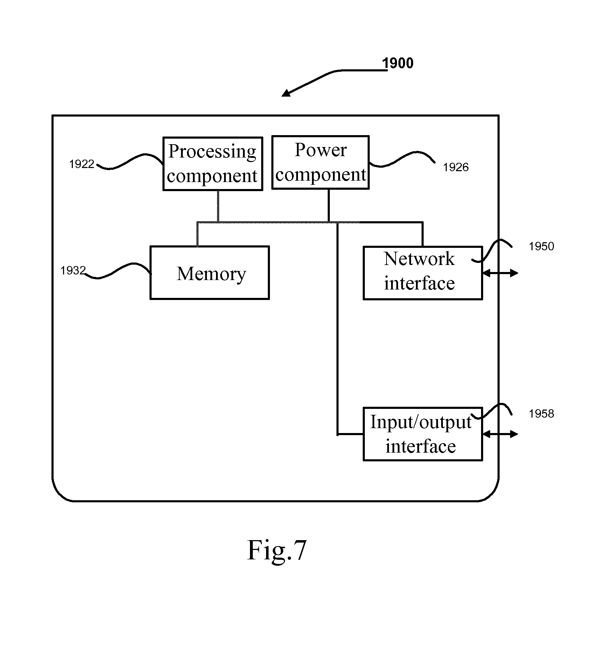

Fig. 7 is a block diagram illustrating a server for visiting a webpage, according to an exemplary embodiment. For example, a device 1900 may be provided as a server. Referring to Fig. 7, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions and include a processor; and a memory for storing instructions executable by the processor, wherein the processor is configured to receive a webpage visit request from a client, wherein the webpage visit request includes at least a webpage url and a last visit time point; search a webpage update database corresponding to the webpage according to the webpage url, wherein one or more update time points and webpage content information corresponding to the respective update time points is/are stored in the webpage update database; generate a webpage increment data package according to the webpage update database and the last visit time point, wherein the webpage increment data package includes webpage update contents from the last visit time point to a most recent update time point; and send the webpage increment data package to the client.

The device 1900 may further include one or more power components 1926 configured to perform power management of the device 1900; one or more wired or wireless network interfaces 1950 configured to connect the device 1900 to a network; one or more input/output (I/O) interfaces 1958; one or more keyboards 1956; and/or one or more operating systems 1941. The device 1900 may operate based on an operating system stored in the memory 1932, such as Windows Server™, Mac OS X™, Unix™, Linux™, FreeBSD™, or the like.

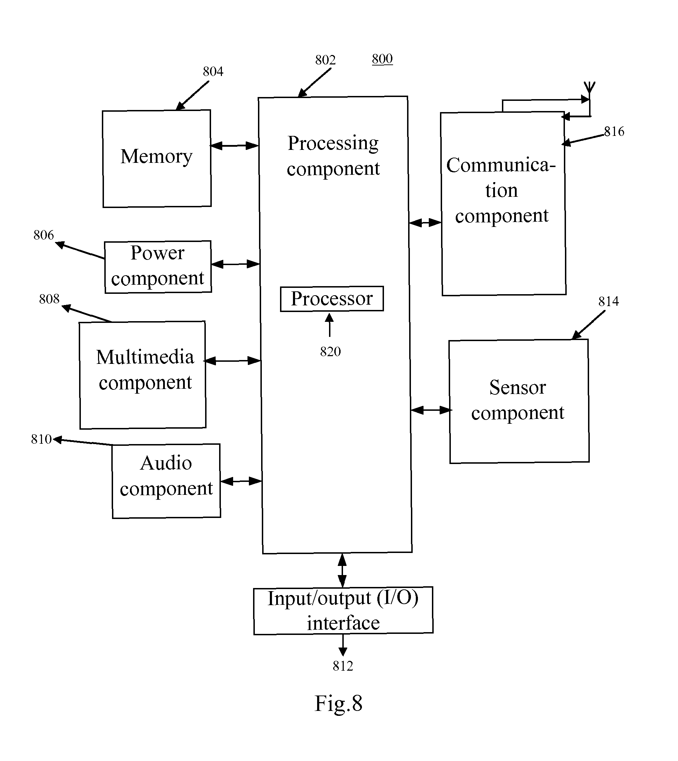

Fig. 8 is a block diagram illustrating a terminal for visiting a webpage, according to an exemplary embodiment. For example, a device 800 may be a mobile phone, a computer, a digital broadcast terminal, a messaging device, a gaming console, a tablet, a medical device, exercise equipment, a personal digital assistant and the like.

Referring to Fig. 8, the device 800 may include one or more of the following components:
a processing component 802, a memory 804, a power component 806, a multimedia component 808, an audio component 810, an input/output (I/O) interface 812, a sensor component 814, and a communication component 816.

The processing component 502 usually controls overall operations of the device 800, such as operations associated with display, telephone calls, data communications, camera operations and recording operations. The processing component 802 may include one or more processors 820 to execute instructions to perform all or a part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802. The processing component 802 includes a processor; and a memory for storing instructions executable by the processor; wherein the processor is configured to send a webpage visit request to a sever, wherein the webpage visit request includes at least a webpage url and a last visit time point; receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point; combine the webpage increment data package with cached webpage contents of the webpage to obtain an updated webpage; and update the cached webpage contents according to the obtained updated webpage, and record a visit time point.

The memory 804 is configured to store various types of data to support the operation of the device 800. Examples of such data include instructions for any application or method operated on the device 800, contact data, phonebook data, messages, pictures, videos, etc. The memory 804 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or optical disk.

The power component 806 provides power to various components of the device 800. The power component 806 may include a power management system, one or more power sources, and other components associated with the generation, management, and distribution of power in the device 800.

The multimedia component 808 includes a screen for providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to:
a home button, a volume button, a starting button and a locking button.

The sensor component 814 includes one or more sensors to provide status assessments of various aspects of the device 800. For instance, the sensor component 814 may detect an open/closed status of the device 800, relative position of components, e.g., the display and the keyboard, of the device 800, a change in position of the device 800 or a component of the device 800, a presence or absence of an user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, in a wire or wireless manner, between the device 800 and other devices. The device 800 can access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is further provided a non-transitory computer readable storage medium including instructions, such as included in the memory 804, executable by the processor 820 in the device 800, for performing the above-described methods. For example, the non-transitory computer-readable storage medium may be a ROM, a random access memory (RAM), a CD-ROM, a magnetic tape, a floppy disc, an optical data storage device and the like.

An embodiment of the present disclosure provides a non-transitory computer readable storage medium, when instructions in the storage medium are executed by a processor of a mobile terminal, the mobile terminal can execute a method for visiting a webpage, the method includes: receiving a webpage visit request from a client, wherein the webpage visit request includes at least a webpage url and a last visit time point; searching a webpage update database corresponding to the webpage according to the webpage url, wherein one or more update time points and webpage content information corresponding to the respective update time points is/are stored in the webpage update database; generating a webpage increment data package according to the webpage update database and the last visit time point, wherein the webpage increment data package includes webpage update contents from the last visit time point to a most recent update time point; and sending the webpage increment data package to the client.

An embodiment of the present disclosure further provides a non-transitory computer readable storage medium, when instructions in the storage medium are executed by a processor of a mobile terminal, the mobile terminal can execute a method for visiting a webpage, the method includes: sending a webpage visit request to a sever, wherein the webpage visit request includes at least a webpage url and a last visit time point; receiving a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package includes webpage update contents from the last visit time point to a most recent update time point; combining the webpage increment data package with cached webpage contents of the webpage to obtain an updated webpage; and updating the cached webpage contents according to the obtained updated webpage, and recording a visit time point.

An embodiment of the present disclosure provides an Internet system including the cloud server (i.e., the server for webpage visit) and the client (i.e., the terminal for webpage visit). For example, the cloud server saves latest contents Latest of a webpage, content difference (A0, Δ0) from a reference time point, contents C of the reference time point S, as well as content differences (A1, Δ1), (A2, Δ2), (A3, Δ3), (A4, Δ4) and (A5, Δ5) of a series of time points, in its database.

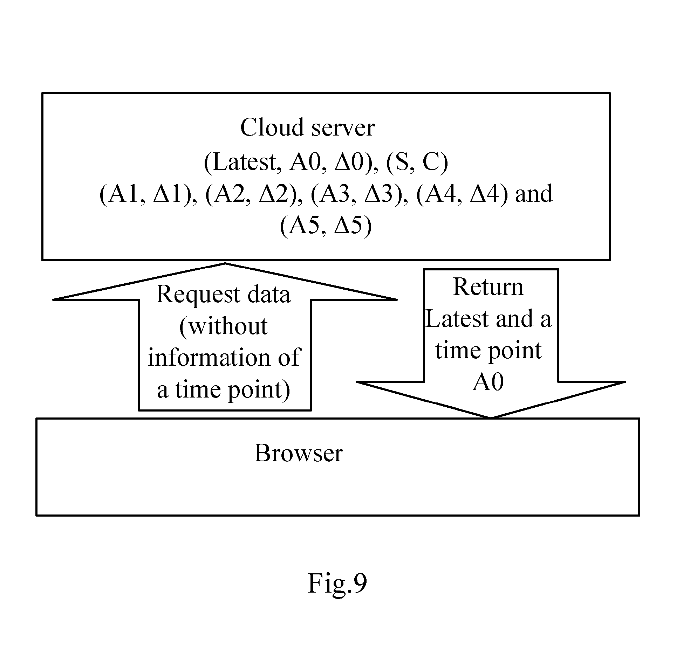

Fig. 9 is a diagram illustrating a data flow of an Internet system, according to an exemplary embodiment. In the present embodiment, a client (i.e., a browser) sends request data without a time point, and a cloud server returns latest contents Latest and a time point A0.

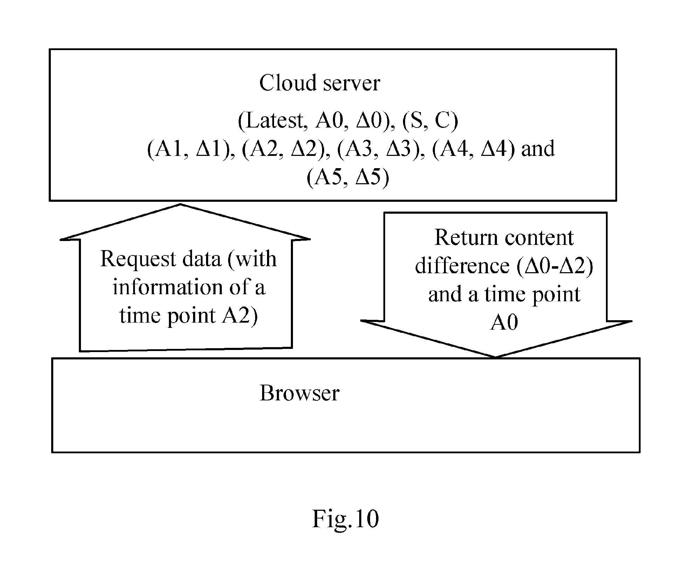

Fig. 10 is a diagram illustrating a data flow of an Internet system, according to another exemplary embodiment. In the present embodiment, a client sends request data with a time point A2, and a cloud server returns content differences Δ0, Δ1 and Δ2 and a time point A0.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure.

## Claims

1. A method for visiting a webpage, **characterized in that**, the method comprises, at a server:
receiving (S102) a webpage visit request from a client, wherein the webpage visit request comprises at least a webpage uniform resource locator (url) and a last visit time point;
searching (S104) a webpage update database corresponding to the webpage according to the webpage url, wherein one or more update time points and webpage content information corresponding to the respective update time points is/are stored in the webpage update database;
generating (S106) a webpage increment data package according to the webpage update database and the last visit time point, wherein the webpage increment data package comprises webpage update contents from the last visit time point to a most recent update time point; and
sending (S108) the webpage increment data package to the client.

2. The method according to claim 1, wherein, the webpage update database is updated by the following update process:
visiting (S202) a webpage corresponding to the webpage update database;
judging (S204) whether update contents exist in the webpage;
if the update contents exist in the webpage, downloading (S206) webpage contents of the webpage; and
the webpage update database saves (S208) the download time as an update time point, and generates webpage content information corresponding to the update time point according to the downloaded webpage contents.

3. The method according to claim 2, wherein, the method comprises:
the webpage update database regularly starting the update process of the webpage update database;
or
the webpage update database starting the update process of the webpage update database after receiving the webpage visit request.

4. The method according to claim 1, wherein, the generating (S106) the webpage increment data package according to the webpage update database and the last visit time point comprises:
searching a first update time point closest to the last visit time point after the last visit time point among the update time points of the webpage update database according to the last visit time point; and
generating a webpage increment data package according to webpage content information corresponding to respective update time points from the first update time point to a most recent update time point.

5. The method according to claim 1, wherein, the method further comprises:
carrying out statistics of a visit number of the webpage according to the webpage visit request;
if the visit number of the webpage is lower than a first threshold value within a certain time, deleting the webpage update database corresponding to the webpage; and
if the visit number of the webpage is higher than a second threshold value within a certain time and no webpage update database corresponding to the webpage exists, creating the webpage update database corresponding to the webpage.

6. A method for visiting a webpage, **characterized in that**, the method comprises, at a client:
sending (S302) a webpage visit request to a sever, wherein the webpage visit request comprises at least a webpage url and a last visit time point;
receiving (S304) a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package comprises webpage update contents from the last visit time point to a most recent update time point;
combining (S306) the webpage increment data package with cached webpage contents of the webpage to obtain an updated webpage; and
updating (S308) the cached webpage contents according to the obtained updated webpage, and recording a visit time point.

7. The method according to claim 6, wherein, the combining (S306) the webpage increment data package with the cached webpage contents of the webpage to obtain the updated webpage comprises:
according to an increment resource in the webpage increment data package, adding the increment resource into the cached webpage contents of the webpage;
according to a substitution resource in the webpage increment data package, substituting a corresponding resource in the cached webpage contents of the webpage with the substitution resource; and
according to a deletion resource in the webpage increment data package, deleting a corresponding resource in the cached webpage contents of the webpage.

8. A server device for enabling visiting a webpage, **characterized in that**, the server device comprises:
a receiving module (102) configured to receive a webpage visit request from a client, wherein the webpage visit request comprises at least a webpage url and a last visit time point;
a search module (104) configured to search a webpage update database corresponding to the webpage according to the webpage url, wherein one or more update time points and webpage content information corresponding to the respective update time points is/are stored in the webpage update database;
a generation module (106) configured to generate a webpage increment data package according to the webpage update database and the last visit time point, wherein the webpage increment data package comprises webpage update contents from the last visit time point to a most recent update time point; and
a sending module (108) configured to send the webpage increment data package to the client.

9. The server device according to claim 8, wherein, the server device further comprises:
an update module configured to update the webpage update database, which comprises to visit a webpage corresponding to the webpage update database, judge whether update contents exist in the webpage, and download webpage contents of the webpage if the update contents exist in the webpage, wherein the webpage update database saves the download time as an update time point, and generates webpage content information corresponding to the update time point according to the downloaded webpage contents.

10. The server device according to claim 8, wherein, the server device further comprises:
a statistics module (202) configured to carry out statistics of a visit number of the webpage according to the webpage visit request;
a deletion module (204) configured to delete the webpage update database corresponding to the webpage if the visit number of the webpage is lower than a first threshold value within a certain time; and
a creation module (206) configured to create the webpage update database corresponding to the webpage if the visit number of the webpage is higher than a second threshold value within a certain time and no webpage update database corresponding to the webpage exists.

11. A client device for visiting a webpage, **characterized in that**, the client device comprises:
a visit module (202) configured to send a webpage visit request to a sever, wherein the webpage visit request comprises at least a webpage url and a last visit time point;
a receiving module (204) configured to receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package comprises webpage update contents from the last visit time point to a most recent update time point;
a combination module (206) to combine the webpage increment data package with cached webpage contents of the webpage to obtain an updated webpage; and
a catching module (208) configured to update the cached webpage contents according to the obtained updated webpage, and record a visit time point.

12. The client device according to claim 11, wherein, the combination module (206) comprises:
an increment module configured to, according to an increment resource in the webpage increment data package, add the increment resource into the cached webpage contents of the webpage;
a substitution module configured to, according to a substitution resource in the webpage increment data package, substitute a corresponding resource in the cached webpage contents of the webpage with the substitution resource; and
a deletion module configured to, according to a deletion resource in the webpage increment data package, delete a corresponding resource in the cached webpage contents of the webpage.

13. A server for visiting a webpage, **characterized in that**, the server comprises:
a processor (1922); and
a memory (1932) for storing instructions executable by the processor;
wherein the processor is configured to:
receive a webpage visit request from a client, wherein the webpage visit request comprises at least a webpage url and a last visit time point;
search a webpage update database corresponding to the webpage according to the webpage url, wherein one or more update time points and webpage content information corresponding to the respective update time points is/are stored in the webpage update database;
generate a webpage increment data package according to the webpage update database and the last visit time point, wherein the webpage increment data package comprises webpage update contents from the last visit time point to a most recent update time point; and
send the webpage increment data package to the client.

14. A terminal for visiting a webpage, **characterized in that**, the terminal comprises:
a processor (820); and
a memory (804) for storing instructions executable by the processor;
wherein the processor is configured to:
send a webpage visit request to a sever, wherein the webpage visit request comprises at least a webpage url and a last visit time point;
receive a webpage increment data package returned by the server, wherein the webpage increment data package is generated according to a webpage update database and the last visit time point in the server, one or more update time points and webpage content information corresponding to the respective update time points is/are stored in the webpage update database, and the webpage increment data package comprises webpage update contents from the last visit time point to a most recent update time point;
combine the webpage increment data package with cached webpage contents of the webpage to obtain an updated webpage; and
update the cached webpage contents according to the obtained updated webpage, and record a visit time point.

15. A computer program, which when executing on a processor, performs a method according to any one of claims 1 to 5, or claims 6 to 7.
